(19) **Europäisches Patentamt European Patent Office Office européen des brevets**

(11) **EP 4 600 205 A1**

(12) **EUROPEAN PATENT APPLICATION**
published in accordance with Art. 153(4) EPC

(43) Date of publication:
**13.08.2025 Bulletin 2025/33**

(51) International Patent Classification (IPC):
**C01B 3/38** (2006.01)    **C01B 3/40** (2006.01)
**B01J 23/00** (2006.01)

(21) Application number: **23875131.7**

(22) Date of filing: **22.09.2023**

(52) Cooperative Patent Classification (CPC):
**C01B 3/40; B01J 23/00; B01J 23/002; B01J 23/83; B01J 37/00; C01B 3/38; C01B 32/50;**
B01J 2523/24; B01J 2523/47; C01B 2203/0233; C01B 2203/0238; C01B 2203/1241

(86) International application number:
**PCT/KR2023/014480**

(87) International publication number:
**WO 2024/076065 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.10.2022 KR 20220128043**

(71) Applicant: **LG Chem, Ltd.**
**Yeongdeungpo-gu**
**Seoul 07336 (KR)**

(72) Inventors:
• **CHO, Jun Yeon**
  **Daejeon  34122 (KR)**
• **CHOI, Jae Soon**
  **Daejeon 34122 (KR)**

• **KIM, Sangjin**
  **Daejeon 34122 (KR)**
• **KIM, Sojin**
  **Daejeon 34122 (KR)**
• **KIM, Suji**
  **Daejeon 34122 (KR)**
• **KIM, Yongseon**
  **Daejeon 34122 (KR)**
• **CHOI, Jun Seon**
  **Daejeon 34122 (KR)**
• **CHOI, Hyun A**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54)    **REFORMING PROCESS FOR CARBON DIOXIDE**

(57)    The present application provides a carbon dioxide reforming process including: supplying a mixed raw material (feed) including carbon dioxide ($CO_2$), methane ($CH_4$) and hydrogen ($H_2$) to a reactor; and causing the mixed raw material to contact a catalyst inside the reactor, wherein Equation 1 below is satisfied.

[Equation 1]

$$0.05 < a/b \leq 0.3$$

in Equation 1,
a refers to a volume of hydrogen in the mixed material, and

b refers to a volume of methane in the mixed raw material.

[Figure 1]

EP 4 600 205 A1

## Description

[Technical Field]

The present application claims priority to and the benefit of Korean Patent Application No. 10-2022-0128043 filed in the Korean Intellectual Property Office on October 6, 2022, the entire contents of which are incorporated herein by reference.

The present application relates to a carbon dioxide reforming process.

[Background Art]

As part of efforts to reduce greenhouse gases caused by global warming, much research is underway on carbon dioxide conversion technologies. A carbon dioxide reforming reaction, one of the carbon dioxide conversion technologies, is a technology to obtain a synthesis gas composed of hydrogen and carbon monoxide by reacting methane and carbon dioxide.

The synthesis gas is a material with high development value as a raw material for various downstream applications. As a method for industrially obtaining the synthesis gas ($H_2$/CO), a reforming reaction of natural gas may be largely divided into a steam reforming process, a carbon dioxide ($CO_2$) reforming process, a complex reforming process (steam & $CO_2$ reforming process), a catalytic partial oxidation process, an autothermal reforming process, a tri-reforming process, such as the following Reaction Schemes 1 to 6, and the like.

[Reaction Scheme 1]    $CH_4 + H_2O \rightarrow 3H_2 + CO$  $\triangle H = 226$ kJ/mol

[Reaction Scheme 2]    $CH_4 + CO_2 \rightarrow 2H_2 + 2CO$  $\triangle H = 261$ kJ/mol

[Reaction Scheme 3]    $3CH_4 + CO_2 + 2H_2O \rightarrow 8H_2 + 4CO$  $\triangle H = 659$ kJ/mol

[Reaction Scheme 4]    $CH_4 + 0.5O_2 \rightarrow 2H_2 + CO$  $\triangle H = -44$ kJ/mol

[Reaction Scheme 5]    autothermal reforming: Reaction Scheme 1 + Reaction Scheme 3

[Reaction Scheme 6]    tri-reforming: Reaction Scheme 1 + Reaction Scheme 2 + Reaction Scheme 3

Among these, the carbon dioxide reforming process as shown in Reaction Scheme 2 is a method of producing a synthesis gas (syngas) through a catalytic reaction of carbon dioxide and methane without steam, and is also called a dry reforming process.

The dry reforming process or complex reforming process has an advantage in that it is advantageous for conversion into various carbon compounds, considering a proportion of hydrogenated carbon monoxide in the produced synthesis gas. In addition, the dry reforming process or complex reforming process is significant in that it uses carbon dioxide, a greenhouse gas, as a reactant.

Meanwhile, the dry reforming process or complex reforming process is an endothermic reaction and shows that the higher the temperature, the higher the conversion rate of carbon dioxide. However, in this process, there has been a problem of rapid carbon deposition on a surface of a commonly used nickel catalyst.

In order to solve this problem, a method of simultaneously supplying an excessive amount of steam (volume of hydrogen/volume of methane$\geq$1) has been introduced, but problems such as an increase in required energy and a decrease in carbon dioxide conversion rate due to the supply of steam have occurred.

Therefore, there is a need to develop a method for suppressing carbon deposition on a catalyst used in the carbon dioxide reforming process without reducing the conversion rate of the carbon dioxide reforming process.

Prior Art Document

Korean Patent Application Publication No. 10-2019-0076367

[Detailed Description of the Invention]

[Technical Problem]

The present application has been made in an effort to provide a carbon dioxide reforming process.

[Technical Solution]

An exemplary embodiment of the present application provides a carbon dioxide reforming process including: supplying a mixed raw material (feed) including carbon dioxide ($CO_2$), methane ($CH_4$) and hydrogen ($H_2$) to a reactor; and causing the mixed raw material to contact a catalyst inside the reactor, wherein Equation 1 below is satisfied.

$$[Equation\ 1]$$

$$0.05 < a/b \leq 0.3$$

in Equation 1,

a refers to a volume of hydrogen in the mixed raw material, and
b refers to a volume of methane in the mixed raw material.

[Advantageous Effects]

The carbon dioxide reforming process according to an exemplary embodiment of the present application has an advantage in that it is possible to suppress carbon deposition on a catalyst that may occur during the process, enabling a long-term stable operation.
In addition, the carbon dioxide reforming process has an advantage in that it is easy to adjust a ratio of $H_2$ and CO, which is required in a post-stage process such as an oxo alcohol process that follows the carbon dioxide reforming process, to a desired ratio.

[Brief Description of Drawings]

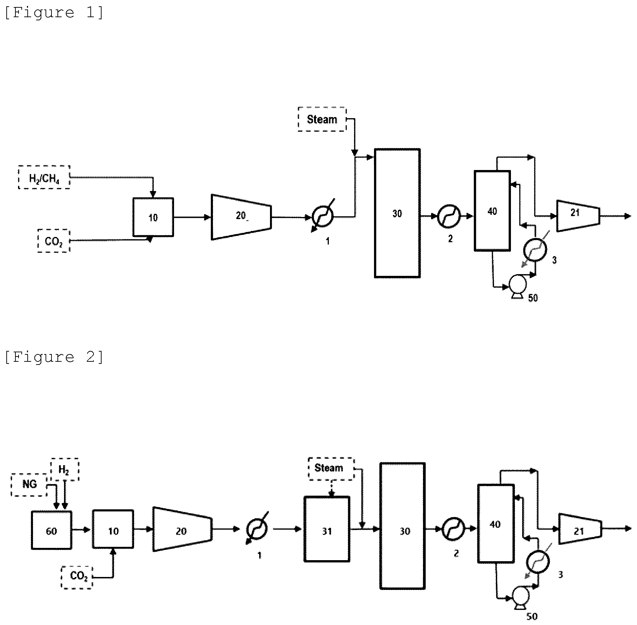

FIGS. 1 and 2 are views schematically showing a carbon dioxide reforming process according to the present application.

<Explanation of Reference Numerals and Symbols>

1: first heat exchanger
2: second heat exchanger
3: third heat exchanger
10: mixer
20: first compressor
21: second compressor
30: reformer
31: pre-reformer
40: reactor
50: pump
60: desulfurization system

[Best Mode]

Hereinafter, the present specification will be described in more detail.
Throughout the present specification, when a member is referred to as being "on" another member, the member can be in direct contact with another member or an intervening member may also be present.
In the present specification, when a part is referred to as "including" a certain component, it means that the part can further include another component, not excluding another component, unless explicitly described to the contrary.
In the present specification, the "carbon dioxide reforming process" may also be expressed as "carbon dioxide reforming method" or "carbon dioxide reforming reaction."

In the present specification, "carbon dioxide ($CO_2$)", "methane ($CH_4$)" and "hydrogen ($H_2$)" may be supplied in the form of gas.

In the present specification, "methane ($CH_4$)-hydrogen ($H_2$) mixed gas" refers to a mixed gas of methane ($CH_4$) and hydrogen ($H_2$).

In the present specification, "final mixed gas" refers to a mixed gas that has completed mixing inside the mixer.

An exemplary embodiment of the present application provides a carbon dioxide reforming process including: supplying a mixed raw material (feed) including carbon dioxide ($CO_2$), methane ($CH_4$) and hydrogen ($H_2$) to a reactor; and causing the mixed raw material to contact a catalyst inside the reactor, wherein Equation 1 below is satisfied.

$$[\text{Equation 1}]$$

$$0.05 < a/b \leq 0.3$$

in Equation 1,

a refers to a volume of hydrogen in the mixed raw material, and
b refers to a volume of methane in the mixed raw material.

The carbon dioxide reforming process according to the present application includes supplying a mixed raw material of carbon dioxide ($CO_2$), methane ($CH_4$) and hydrogen ($H_2$) to a reactor, wherein a ratio of volumes of methane and hydrogen of the mixed raw material satisfies Equation 1 above, whereby it is possible to suppress carbon deposition on the catalyst that may occur during the process, enabling a long-term stable operation.

In the present specification, the carbon dioxide reforming process may also be expressed as a methane reforming process or a natural gas reforming process. In addition, the process may also be expressed as terms of method or reaction.

In an exemplary embodiment of the present application, the carbon dioxide reforming process may, more specifically, mean a dry process of carbon dioxide. In addition, the process may also be expressed as terms of method or reaction.

In an exemplary embodiment of the present application, a/b in Equation 1 may be $0.05 < a/b \leq 0.3$, and preferably $0.1 \leq a/b \leq 0.25$. There are disadvantages in that if a/b is equal to or less than 0.05, it is difficult to exhibit the effect of suppressing carbon deposition on the catalyst by addition of hydrogen, and if a/b is larger than 0.3, occurrence of side reactions increases, and the yield of hydrogen is lowered.

In an exemplary embodiment of the present application, the step of causing the mixed raw material to contact the catalyst inside the reactor may be performed at a temperature ranging from 600°C to 1,000°C, preferably 650°C to 900°C, and most preferably 750°C to 850°C. At temperatures below 600°C, the reforming reaction may not occur well, and at temperatures above 1,000°C, a reactor to withstand the high temperatures is required, which may increase process costs.

In an exemplary embodiment of the present application, the step of causing the mixed raw material to contact the catalyst inside the reactor may be performed at a pressure within the reactor ranging from 0 bar(g) to 20 bar(g), preferably 0 bar(g) to 10 bar(g), and more preferably 0 bar (g) to 5 bar(g). Here, bar (g) refers to a bar gauge pressure, and satisfies a relationship of Equation 3 below with a bar gauge absolute pressure expressed as bar(a).

$$[\text{Equation 3}]$$

$$bar(g) = 1.013 + bar(a)$$

In other words, a bar gauge pressure refers to a value obtained by adding an atmospheric pressure (standard condition: 1.013 bar) to a bar gauge absolute pressure.

In an exemplary embodiment of the present application, the step of supplying the mixed raw material (feed) to the reactor means supplying the mixed raw material in the form of gas, and a gas hourly space velocity (GHSV) may be 250 $hr^{-1}$ to 3,000 $hr^{-1}$, and preferably 500 $hr^{-1}$ to 2,000 $hr^{-1}$.

In an exemplary embodiment of the present application, the catalyst may be a catalyst for carbon dioxide reformation.

In an exemplary embodiment of the present application, the catalyst may be nickel (Ni) or ruthenium (Ru) That is, the catalyst may be a catalyst including nickel or ruthenium, but is not limited thereto.

In an exemplary embodiment of the present application, the catalyst may be a perovskite-based catalyst containing nickel or ruthenium, but is not limited thereto.

That is, a catalyst commonly used in the carbon dioxide reforming process can be used as long as Equation 1 above and Equation 2 below of the present application can be satisfied. However, if the catalyst described above is satisfied, a more efficient carbon dioxide reforming process may be possible.

In an exemplary embodiment of the present application, the perovskite-based catalyst may be represented by the following Chemical Formula 1.

[Chemical Formula 1]     $Sr_{1-x}A_xTi_{1-y}B_yO_{3-\delta}$

in Chemical Formula 1,

A is selected from Y, Sc and lanthanide series elements,
B is Ni, Co, Fe, Mn, Cr, Mo, Ru or Rh,
x is $0 \leq x < 1$,
y is $0 < y < 0.2$, and
$\delta$ is $0 \leq \delta < 1$.

In an exemplary embodiment of the present application, the catalyst may be a pellet-type catalyst, a ceramic support catalyst, or a porous metal structure catalyst. That is, an appropriate type of catalyst can be selected and used depending on environments in which the catalyst is used.

More specifically, in an exemplary embodiment of the present application, the catalyst includes a porous metal structure; a primary coating layer coated on the porous metal structure and including an inorganic oxide; and a perovskite-based compound coated on the primary coating layer and represented by Chemical Formula 1 above. A layer including the perovskite-based compound coated on the primary coating layer and represented by Chemical Formula 1 above may be referred to as a secondary coating layer.

In an exemplary embodiment of the present application, the primary coating layer may further include a perovskite-based compound represented by the following Chemical Formula 2.

[Chemical Formula 2]     $SrTiO_3$

In an exemplary embodiment of the present application, the perovskite-based compound represented by Chemical Formula 2 is a compound without a catalyst component (i.e., it does not include A and/or B metals, compared to the structure of Chemical Formula 1), and the perovskite-based compound represented by Chemical Formula 1 above is a compound including a catalyst component (which means a metal corresponding to A and/or B in the structure of Chemical Formula 1), and they are different from each other. In an exemplary embodiment of the present application, the primary coating layer may include an inorganic oxide alone, or may simultaneously include a perovskite-based compound represented by Chemical Formula 2 and an inorganic oxide.

In an exemplary embodiment of the present application, the porous metal structure may be a metal foam including NiCrAlFe, NiCrAl, SiC, or $\alpha$-Al$_2$O$_3$.

The porous metal structure is a structure having various shapes and has a small heat capacity and an excellent heat transfer ability, so it can be molded into a desired shape and used. The shape and size of the porous metal structure are not particularly limited, and a porosity of the porous metal structure may be 10% to 99%, 50% to 96%, or 85% to 96%. The pore size (cell size) of the porous metal structure may be 400 $\mu$m to 1,500 $\mu$m, or 450 $\mu$m to 1,400 $\mu$m. If the cell size of the porous metal structure is less than 400um, it may be difficult to coat a precursor solution, and if it exceeds 1,500 $\mu$m, it is undesirable because a surface area on which the catalyst can be coated is reduced, which may be disadvantageous in the process. The porous metal structure can be appropriately manufactured by one skilled in the art using methods known in the art, taking into account the material, cell size, porosity, and the like of the porous metal structure described above.

In an exemplary embodiment of the present application, the inorganic oxide may include one or more of TiO$_2$, SiO$_2$ and ZrO$_2$.

In an exemplary embodiment of the present application, a total content of the perovskite-based compound represented by Chemical Formula 2 above and the inorganic oxide may be 1% by weight to 20% by weight or 1.5% by weight to 18% by weight based on a total weight of the porous metal structure. If the total content of the perovskite-based compound represented by Chemical Formula 2 above and the inorganic oxide exceeds 20% by weight, it is undesirable because the ability to coat the perovskite-based compound represented by Chemical Formula 1 above may be reduced and the activity of the catalyst compared to the volume of the porous metal structure may be lowered. In addition, if the total content of the perovskite-based compound represented by Chemical Formula 2 above and the inorganic oxide is less than 1% by weight, the content is so small that it may be difficult to obtain the effect of the primary coating layer.

In an exemplary embodiment of the present application, a weight ratio of the first coating layer to the second coating layer including the perovskite-based compound represented by Chemical Formula 1 above may be 1:1 to 1:20, or 1:1.1 to 1:15. If the weight ratio of the first coating layer to the second coating layer including the perovskite-based compound represented by Chemical Formula 1 above deviates from the above range, it is undesirable because the activity of the catalyst compared to the volume of the porous metal structure may be lowered.

In an exemplary embodiment of the present application, a content of the perovskite-based compound represented by Chemical Formula 1 above may be 3% by weight to 40% by weight, 6% by weight to 35% by weight, or 7% by weight to 30% by weight, based on a total weight of the catalyst. If the content of the perovskite-based compound represented by Chemical Formula 1 above is less than 3% by weight based on the total weight of the catalyst, it is not desirable because the reactivity may decrease due to the relatively small number of active sites on the surface of the catalyst. In addition, if the content of the perovskite-based compound represented by Chemical Formula 1 above exceeds 40% by weight based on the total weight of the catalyst, a relatively large amount of catalyst component compared to the porous metal structure is contained, so that it is difficult to maintain the pore structure and it is not easy to combine the catalyst component and the porous metal structure, resulting in a reduction in the practical benefit of the carbon dioxide reforming reaction. In an exemplary embodiment of the present application, the primary coating layer may be provided on an entire surface of the porous metal structure.

In an exemplary embodiment of the present application, at least a portion of the surface of the catalyst may include a protrusion shape. The protrusion shape may be spherical, elliptical, or a combination thereof, but is not limited thereto.

In an exemplary embodiment of the present application, the primary coating layer including the inorganic oxide may serve to fix the perovskite-based compound (including the catalyst component) represented by Chemical Formula 1 above on the porous metal structure. In addition, the perovskite-based compound represented by Chemical Formula 1 above may be present in the form of protrusion on the primary coating layer, which can increase a reaction surface area of the catalyst to improve the performance of the carbon dioxide reforming reaction.

In addition, according to an exemplary embodiment of the present application, when the primary coating layer including the inorganic oxide and the perovskite-based compound represented by Chemical Formula 1 above are applied at the same time, a total amount of catalyst supported on the porous metal structure can be increased, as compared with a case where the catalyst particles are applied alone. In addition, according to an exemplary embodiment of the present application, when the primary coating layer including the inorganic oxide is applied, metals (Ni, Cr, etc.), which are main components of the porous metal structure, can be prevented from being exposed to a surface in the form of metal oxides ($NiO$, $Cr_2O_3$ etc.) under long-term operating conditions of high temperature (750°C or higher), and the catalyst component ratio of Chemical Formula 1 or the catalyst phase change can be prevented, so that it is possible to improve the durability and performance of the catalyst.

In an exemplary embodiment of the present application, the method may further include preparing a mixed raw material (feed) including carbon dioxide ($CO_2$), methane ($CH_4$) and hydrogen ($H_2$) for supplying to the reactor.

In an exemplary embodiment of the present application, the step of preparing a mixed raw material (feed) including carbon dioxide ($CO_2$), methane ($CH_4$) and hydrogen ($H_2$) for supplying to the reactor may include supplying carbon dioxide ($CO_2$), natural gas and hydrogen ($H_2$) to a mixer, respectively, or supplying carbon dioxide ($CO_2$) and a mixed gas of methane ($CH_4$)-hydrogen ($H_2$) to a mixer, respectively; mixing the gases supplied to the mixer to produce a final mixed gas; and compressing the final mixed gas.

The carbon dioxide reforming process according to an exemplary embodiment of the present application may further include reforming the compressed final mixed gas to produce a synthesis gas including carbon monoxide (CO), hydrogen ($H_2$), unreacted methane ($CH_4$) and carbon dioxide ($CO_2$).

In an exemplary embodiment of the present application, the step of preparing the mixed raw material (feed) including carbon dioxide ($CO_2$), methane ($CH_4$) and hydrogen ($H_2$) for supplying to the reactor may include supplying carbon dioxide ($CO_2$), natural gas and hydrogen ($H_2$) to a mixer, respectively; mixing the gases supplied to the mixer to produce a final mixed gas; and compressing the final mixed gas.

In this case as well, the carbon dioxide reforming process according to an exemplary embodiment of the present application may further include reforming the compressed final mixed gas to produce a synthesis gas including carbon monoxide (CO), hydrogen ($H_2$), unreacted methane ($CH_4$) and carbon dioxide ($CO_2$).

In an exemplary embodiment of the present application, the step of preparing the mixed raw material (feed) including carbon dioxide ($CO_2$), methane ($CH_4$) and hydrogen ($H_2$) for supplying to the reactor may include supplying carbon dioxide ($CO_2$) and a mixed gas of methane ($CH_4$)-hydrogen ($H_2$) to a mixer, respectively; mixing the gases supplied to the mixer to produce a final mixed gas; and compressing the final mixed gas.

In this case, the carbon dioxide reforming process according to an exemplary embodiment of the present application may further include reforming the compressed final mixed gas to produce a synthesis gas including carbon monoxide (CO), hydrogen ($H^2$), unreacted methane ($CH_4$) and carbon dioxide ($CO_2$).

The carbon dioxide reforming process according to an exemplary embodiment of the present application may further include supplying the synthesis gas to the reactor; and causing the synthesis gas to contact the catalyst. For a supply rate in the step of supplying the synthesis gas to the reactor and a temperature and a pressure at which the step of causing the synthesis gas to contact the catalyst are performed, a supply rate condition in the step of supplying the mixed raw material to the reactor and temperature and pressure conditions at which the step of causing the mixed raw material to contact the catalyst are performed may be applied, respectively.

In an exemplary embodiment of the present application, the step of reforming the compressed final mixed gas to produce a synthesis gas including carbon monoxide (CO), hydrogen ($H_2$), unreacted methane ($CH_4$) and carbon dioxide ($CO_2$) may include adding steam to the compressed final mixed gas; and reforming the compressed final mixed gas to which the steam has been added to produce a synthesis gas including carbon monoxide (CO), hydrogen ($H_2$), unreacted methane ($CH_4$) and carbon dioxide ($CO_2$).

In an exemplary embodiment of the present application, the mixed raw material (feed) may further include steam, and the mixed raw material may satisfy Equation 2 below.

$$[Equation\ 2]$$

$$0.1 \leq c/b \leq 0.3$$

in Equation 2,

c refers to a volume of steam in the mixed raw material, and
b refers to a volume of methane in the mixed raw material.

In an exemplary embodiment of the present application, the mixed raw material (feed) may include carbon dioxide ($CO_2$), methane ($CH_4$), hydrogen ($H_2$) and steam, and may satisfy Equation 2 above.

In an exemplary embodiment of the present application, c/b in Equation 2 above may be $0.1 \leq c/b \leq 0.3$, preferably $0.1 \leq c/b \leq 0.22$, and more preferably $0.1 \leq c/b \leq 0.2$. When c/b is larger than 0.3, there is a disadvantage in that a carbon dioxide conversion rate is lowered and the energy cost for generating steam increases.

The carbon dioxide reforming process according to an exemplary embodiment of the present application may include preparing a mixed raw material (feed) including carbon dioxide ($CO_2$), methane ($CH_4$), hydrogen ($H_2$) and steam for supplying to the reactor.

In an exemplary embodiment of the present application, the step of preparing the mixed raw material (feed) including carbon dioxide ($CO_2$), methane ($CH_4$), hydrogen ($H_2$) and steam for supplying to the reactor may include supplying the mixed raw material to a mixer; mixing the mixed raw material supplied to the mixer to produce a final mixed gas; and compressing the final mixed gas.

In this case as well, the carbon dioxide reforming process according to an exemplary embodiment of the present application may further include reforming the compressed final mixed gas to produce a synthesis gas including carbon monoxide (CO), hydrogen ($H_2$), unreacted methane ($CH_4$), steam, and carbon dioxide ($CO_2$).

In this case, the above description can be applied, except that the synthesis gas is produced by reforming the mixed raw material further including steam.

An exemplary embodiment of the present invention provides a carbon dioxide reforming process including: supplying a mixed raw material (feed) including carbon dioxide ($CO_2$), methane ($CH_4$), hydrogen ($H_2$), and steam to a reactor; and causing the mixed raw material to contact a catalyst inside the reactor, wherein the Equations 1 and 2 are satisfied.

More specifically, an exemplary embodiment of the present application provides a carbon dioxide reforming process including: supplying carbon dioxide ($CO_2$), natural gas and hydrogen ($H_2$) to a mixer, respectively, or supplying carbon dioxide ($CO_2$) and a mixed gas of methane ($CH_4$)-hydrogen ($H_2$) to a mixer, respectively; adding steam to the mixer and then mixing the gases supplied to the mixer to produce a final mixed gas; compressing the final mixed gas; adding steam to the compressed final mixed gas; reforming the compressed final mixed gas to which the steam has been added to produce a synthesis gas including carbon monoxide (CO), hydrogen ($H_2$), steam, unreacted methane ($CH_4$) and carbon dioxide ($CO_2$); supplying the synthesis gas to a reactor; and causing the synthesis gas to contact a catalyst inside the reactor, wherein Equation 1 and Equation 2 above are satisfied.

In the present specification, the final mixed gas may refer to a mixed raw material.

In this case, the above description is applied as description of the mixed raw material, the mixed gas, the mixer, the reactor, the mixed raw material catalyst, the synthesis gas, and the like.

In addition, in an exemplary embodiment of the present application, the mixed raw material may use a by-product gas, which is a by-product generated in an NCC (Naphtha Cracking Center) decomposition process. The by-product gas may include methane ($CH_4$) and hydrogen ($H_2$). Additionally, a ratio of volumes of methane ($CH_4$) and hydrogen ($H_2$) in the by-product gas may satisfy Equation 1 above. Additionally, the by-product gas can be used by adding steam, and Equation 2 above can be satisfied.

The carbon dioxide reforming process according to the present application is to supply the mixed raw material into the reactor or to supply synthesis gas reformed from the mixed raw material, where the ratio of volumes of methane and hydrogen of the mixed raw material satisfies Equation 1 above and the ratio of volumes of methane and steam of the mixed raw material satisfies Equation 2 above, so carbon deposition on the catalyst that may occur during the process can be suppressed more efficiently, enabling a long-term stable operation.

In an exemplary embodiment of the present application, the step of reforming the compressed gas refers to reforming hydrocarbon-based fuel to produce hydrogen and carbon monoxide. This is expressed as synthesis gas.

In an exemplary embodiment of the present application, the step of reforming the compressed gas may use steam reforming, but is not limited thereto.

In the present specification, the natural gas refers to a substance including methane as a main component and sulfur and C2 to C3 hydrocarbon components.

In an exemplary embodiment of the present application, the step of supplying carbon dioxide ($CO_2$), natural gas and hydrogen ($H_2$) to the mixer, respectively, includes supplying the natural gas and the hydrogen ($H_2$) to desulfurization system; removing sulfur components of the natural gas from the desulfurization system; and supplying the carbon dioxide ($CO_2$), the natural gas from which the sulfur components have been removed, and the hydrogen to the mixer, respectively.

In an exemplary embodiment of the present application, the step of supplying the carbon dioxide ($CO_2$), natural gas and hydrogen ($H_2$) to the mixer, respectively, further includes pre-reforming C2 to C3 hydrocarbon components of the natural gas to a C1 hydrocarbon component before reforming the compressed gas.

FIG. 1 shows a carbon dioxide reforming process according to the present application. According to FIG. 1, carbon dioxide ($CO_2$), and a mixed gas of methane ($CH_4$)-hydrogen ($H_2$) can be supplied to a mixer 10, respectively. In the mixer 10, carbon dioxide ($CO_2$) and mixed gas of methane ($CH_4$)-hydrogen ($H_2$) can be mixed. That is, a final mixed gas can be produced. Additionally, the mixed gas may further include steam (not shown in the drawing). Thereafter, the mixed carbon dioxide ($CO_2$), methane ($CH_4$) and hydrogen ($H_2$) are compressed in a first compressor 20, so that a compressed final mixed gas is produced. Then, a temperature of the compressed final mixed gas is raised using a first heat exchanger 1, and then the compressed final mixed gas is reformed together with steam in a reformer 30 to produce synthesis gas. The reformer 30 is an apparatus that reforms hydrocarbon-based fuel to produce hydrogen and carbon monoxide, and may use steam reforming, but the present invention is not limited thereto.

In this case, a volume of hydrogen and a volume of methane in the mixed raw material satisfy Equation 1, and a volume of steam and a volume of methane in the mixed raw material satisfy Equation 2.

The reformed mixed raw material is cooled through a second heat exchanger 2 and then supplied to a reactor 40. In this case, a quench tower may be used as the reactor 40. In the reactor 40, a synthesis gas of $H_2$ and CO is produced as a product, so that the carbon dioxide reforming process is ultimately completed. Thereafter, condensate water is removed from the reactor 40, and the generated synthesis gas product of $H_2$ and CO can be cooled. The cooled synthesis gas product of $H_2$ and CO is compressed to an appropriate pressure in a second compressor 21 and then supplied for a downstream process.

In this case, the condensate water can be recycled as cooling water through a pump 50 of FIG. 1, and a third heat exchanger 3 can be used in this process.

FIG. 2 shows another carbon dioxide reforming process according to the present application. According to FIG. 2, carbon dioxide ($CO_2$), natural gas and hydrogen ($H_2$) can be supplied to the mixer 10, respectively. That is, among gases to be supplied to the mixer 10, natural gas and hydrogen are separately supplied, instead of supplying the mixed gas of methane ($CH_4$)-hydrogen ($H_2$). In this case as well, carbon dioxide ($CO_2$), methane ($CH_4$) and hydrogen ($H_2$) can be mixed in the mixer 10. That is, a final mixed gas can be produced. Additionally, the mixed gas may further include steam (not shown in the drawing). Thereafter, the mixed carbon dioxide ($CO_2$), methane ($CH_4$) and hydrogen ($H_2$) are compressed in a first compressor 20, so that a compressed final mixed gas is produced. Then, a temperature of the compressed final mixed gas is raised using the first heat exchanger 1, and then the compressed final mixed gas is reformed together with steam in the reformer 30 to produce synthesis gas. In this case as well, as described in FIG. 1, the reformer 30 is an apparatus that reforms hydrocarbon-based fuel to produce hydrogen and carbon monoxide, and may use steam reforming, but the present invention is not limited thereto.

In addition, in the case of FIG. 2, as in FIG. 1, a volume of hydrogen and a volume of methane in the mixed raw material satisfy Equation 1 above, and a volume of steam and a volume of methane in the mixed raw material satisfy Equation 2 above.

However, when the natural gas is used as a raw material as shown in FIG. 2, unlike the process in FIG. 1, it is necessary to further perform a process of inputting the natural gas and the hydrogen into the desulfurization system 60 before carbon dioxide ($CO_2$), methane ($CH_4$) and hydrogen ($H_2$) are mixed in the mixer 10. As an example of the desulfurization system, a hydrodesulfurization (HDS) system may be applied.

In addition, unlike the process of FIG. 1, when the natural gas is used as a raw material as shown in FIG. 2, it is necessary to perform processes of raising the temperature of the mixed raw material with the first heat exchanger 1 and then using a pre-reformer 31, before supplying the mixed raw material to the reformer 30. The pre-reformer functions to decompose C2-C3 hydrocarbon components into methane.

In general, natural gas contains not only sulfur components that can poison the catalyst and C1 hydrocarbons, but also C2 to C3 hydrocarbon components. Therefore, if natural gas is directly supplied to the reformer, the catalyst may be poisoned by the sulfur components, and more coke is produced due to the C2 to C3 hydrocarbon components. Therefore, when natural gas (methane) and hydrogen are supplied separately as shown in FIG. 2, the desulfurization system that removes sulfur components by adding hydrogen before supplying the mixed raw material to the reformer 30 and the pre-reformer 31 that decomposes C2 to C3 hydrocarbons into methane are required.

For reference, in the present specification, "Cn" means "n carbon atoms." In other words, C3 means that there are 3 carbon atoms.

After decomposing the C2 to C3 hydrocarbon components of the mixed raw material into methane in the pre-reformer, fuel reforming is performed in the reformer 30 as described above to produce the mixed raw material.

After the reforming is completed and the mixed raw material is produced, the synthesis gas is cooled through the second heat exchanger 2 and then supplied to the reactor 40, like FIG. 1. In the reactor 40, a synthesis gas of $H_2$ and CO is produced as a product, so that the carbon dioxide reforming process is ultimately completed. Thereafter, condensate water is removed from the reactor 40, and the generated synthesis gas product of $H_2$ and CO can be cooled. The cooled synthesis gas product of $H_2$ and CO is compressed to an appropriate pressure in a second compressor 21 and then supplied for a downstream process. As described above, a quench tower can be used as the reactor 40. The reformer 30 is an apparatus that reforms hydrocarbon-based fuel to produce hydrogen and carbon monoxide, and may use steam reforming, but the present invention is not limited thereto.

In this case as well, condensate water can be recycled as cooling water through the pump 50 of FIG. 1, and the third heat exchanger 3 can be used in this process.

Examples of the downstream process (post-stage process) include an oxo alcohol process, but the present invention is not limited thereto, and various processes can be applied depending on the composition of the produced mixed gas. In other words, the downstream process to be applied may be different depending on purposes and conditions of the process.

In other words, the carbon dioxide reforming process according to the present application can suppress coke production in the catalyst used in the carbon dioxide reforming process (dry reforming process) by introducing a certain amount (small amount) of hydrogen and/or steam, and can be used in various downstream processes.

In an exemplary embodiment of the present application, the catalyst may be applied to a dry reforming process, a steam reforming process, a carbon dioxide ($CO_2$) reforming process, a catalytic partial oxidation process, an autothermal reforming process, a tri-reforming process or a mixed reforming process, and the method of the carbon dioxide reforming process to be applied is not particularly limited.

In an exemplary embodiment of the present application, the method may further include filling the reactor with the catalyst according to the present application before causing the mixed raw material to contact the catalyst inside the reactor; and subjecting the reactor filled with the catalyst to reduction condition of $H_2/N_2$.

In an exemplary embodiment of the present application, the step of subjecting the reactor filled with the catalyst to reduction condition of $H_2/N_2$ may include subjecting the reactor filled with the catalyst to reduction at temperatures ranging from 700°C to 800°C for 1 to 2 hours under condition of $H_2/N_2$.

In an exemplary embodiment of the present application, the condition of $H_2/N_2$ refers to a volume ratio of a volume of hydrogen ($H_2$) to a volume of nitrogen ($N_2$), and $H_2/N_2$ may satisfy 5% to 12%, and preferably 10%.

Mode for Invention

Below, Examples will be described in detail for specifically describing the present application. However, the Examples according to the present application may be modified in other forms, and the scope of the present application is not construed as being limited to the Examples described in detail below. The Examples of the present application are provided to more completely explain the present application to one skilled in the art.

**<Experimental example> Evaluation of carbon dioxide reforming reaction**

**<Example 1>**

A fixed bed reaction system was introduced in order to perform a carbon dioxide reforming reaction, more specifically a dry reforming reaction of carbon dioxide.

In the fixed bed reaction system, an Inconel reactor (inner diameter = 1/2 inch, length = 50 cm) was used, as the catalyst, a catalyst where a porous metal structure was coated with the material (B=Ni) represented by Chemical Formula 1, that is, a Ni catalyst (about 2 g) was filled, a reduction process was performed at 800°C for 1 to 2 hours under conditions of 10% $H_2/N_2$, and then a catalytic reaction was carried out for 60 hours at a reaction temperature condition of 700°C and a reaction pressure condition of 0 bar (g) while supplying a mixed raw material including carbon dioxide ($CO_2$), methane ($CH_4$) and hydrogen ($H_2$) with satisfying gas hourly space velocity (GHSV) = 1,500 hr-1 (based on $CH_4$).

In this case, the ratio of the volume of hydrogen to the volume of methane in the mixed raw material (hereinafter, $H_2/CH_4$) was 0.25.

**<Examples 2 to 6 and Comparative Examples 1 to 6>**

The catalytic reactions of Examples 2 to 6 and Comparative Examples 1 to 4 were performed in the same manner as in Example 1, except that the condition of $H_2/CH_4$, the reaction temperature condition, and the reaction pressure condition were set as shown in Table 1 below.

That is, in Comparative Examples 1 to 4, the catalytic reaction was carried out under conditions where hydrogen was not included in the mixed raw material.

That is, the ranges of conditions for Examples 1 to 6 and Comparative Examples 1 to 4 in Table 1 below are as follows (excluding content of hydrogen).

1) Gas composition: $CH_4$: $CO_2$: $N_2$ = 1:1.1 to 1.2: 0.1
2) Flow rate: gas hourly space velocity (GHSV) = 1,500 $hr^{-1}$ (based on $CH_4$)
3) Temperature: 700°C to 850°C
4) Reaction pressure: 0 to 4 bar(g)

After completion of each reaction of Examples 1 to 6 and Comparative Examples 1 to 4, a reaction conversion rate after 60 hours of reaction was calculated by analyzing the composition of the produced gas using gas chromatography (GC), and is shown in Table 1 below. In addition, the ratio (hereinafter referred to as $H_2/CO$) of the volume of hydrogen to the volume of carbon monoxide after completion of the reaction was also obtained.

The conversion rate was obtained by Equation 4 below, and the GC analysis conditions were as follows. In relation to Table 1 below, in Equation 4 below, i is $CH_4$ or $CO_2$ means.

$$\text{Conversion Rate } (Xi, \%) = [(Fi_{in} - Fi_{out})/Fi_{in}] \times 100 \text{ (Fi = flow rate of i)} \qquad \text{[Equation 4]}$$

<GC analysis conditions>

1) GC model: Agilent 6890
2) Oven temp.: 40°C/7 mim-90°C/5 min-180°C/6 min
3) Detector: TCD, 250°C
4) Sample loop: 0.25 mL
5) Valve box Temp.: 150°C

In addition, after completion of the reaction, a ratio of a reaction (reverse water gas shift (RWGS) reaction that is an opposite of a water gas shift (WGS) reaction) where carbon monoxide and steam in the synthesis gas react to produce hydrogen and carbon dioxide was calculated through Equation 5 below.

A coke generation rate was also calculated using Equation 6 below.

The result values are shown in Table 1 below.

$$\text{RWGS ratio} = (H_2 \text{ mole participating in RWGS reaction})/((2 * (\text{converted } CH_4 \text{ mole}) + \text{in. } H_2 \text{ mole}) \qquad \text{[Equation 5]}$$

$$\text{Coke } \% = (\text{weight of catalyst after reaction} - \text{weight of initial catalyst})/(\text{weight of catalyst after reaction}) \qquad \text{[Equation 6]}$$

[Table 1]

| Section | $H_2/CH_4$ | Temperature (°C) | Pressure (bar(g)) | $CH_4$ Conversion rate (%) | $CO_2$ Conversion rate (%) | $H_2/CO$ | RWGS (%) | Coke (wt%) |
|---------|-----------|------------------|-------------------|---------------------------|---------------------------|----------|----------|-----------|
| Example 1 | 0.25 | 700 | 0 | 70.3 | 75.2 | 0.88 | 12.3 | 9.8 |
| Example 2 | 0.25 | 800 | 0 | 94 | 92 | 0.99 | 6.4 | 0 |
| Example 3 | 0.25 | 850 | 2 | 90 | 89 | 0.95 | 8.4 | 1.3 |

(continued)

| Section | $H_2/CH_4$ | Temperature (°C) | Pressure (bar(g)) | $CH_4$ Conversion rate (%) | $CO_2$ Conversion rate (%) | $H_2/CO$ | RWGS (%) | Coke (wt%) |
|---|---|---|---|---|---|---|---|---|
| Example 4 | 0.25 | 850 | 4 | 85 | 88.6 | 0.93 | 13.5 | 4.3 |
| Example 5 | 0.1 | 850 | 4 | 86 | 88.3 | 0.95 | 10.8 | 4.5 |
| Example 6 | 0.3 | 850 | 4 | 85 | 89 | 0.88 | 15.6 | 4 |
| Comparative Example 1 | 0 | 700 | 0 | 72.5 | 73.5 | 0.75 | 10.9 | 15.5 |
| Comparative Example 2 | 0 | 800 | 0 | 94 | 91 | 0.91 | 4.69 | 1.4 |
| Comparative Example 3 | 0 | 850 | 2 | 89 | 87 | 0.89 | 5.7 | 4.2 |
| Comparative Example 4 | 0 | 850 | 4 | 85 | 85 | 0.88 | 7.2 | 9.3 |
| Comparative Example 5 | 0.4 | 850 | 4 | 85 | 89 | 0.84 | 18.7 | 3.8 |
| Comparative Example 6 | 0.05 | 850 | 4 | 85 | 86 | 0.89 | 7.5 | 9.1 |

As can be seen in Table 1 above, it could be confirmed that a ratio of when $H_2/CH_4$ in the mixed raw material satisfies Equation 1 according to the present application, appropriate levels of $CH_4$ and $CO_2$ conversion rates were exhibited and the coke generation rate was low under the same reaction temperature and reaction pressure conditions. That is, when comparing Example 1 and Comparative Example 1, it could be confirmed that the coke generation rate in Example 1 was lower.

Through comparisons of the other Examples and Comparative Examples, it could be confirmed that a more stable operation was possible over a long period of time than using, as fuel, methane not mixed with hydrogen under the same conditions.

In addition, it could be confirmed that the ratio of reverse water gas shift (RWGS) reaction and the ratio of $H_2/CO$ could be changed by adjusting the ratio of $H_2/CH_4$. This means that the ratio of $H_2$ and CO necessary for downstream processes following the carbon dioxide reforming process can be easily adjusted according to a purpose of each process.

In Comparative Example 5 in which the ratio of $H_2/CH_4$ in the mixed raw material exceeded 0.3, the upper limit of Equation 1 above according to the present application, it could be confirmed that the value of RWGS exceeded 18. If the value of RWGS exceeds 18, a problem that the yield deteriorates may occur.

That is, when the ratio of $H_2/CH_4$ in the mixed raw material satisfies Equation 1 according to the present application, there is an advantage in that it is possible to lower the coke generation rate while increasing the yield of the carbon dioxide reforming process.

**<Example 7>**

A mixed raw material including carbon dioxide ($CO_2$), methane ($CH_4$), steam, and hydrogen ($H_2$) was added with steam and then reformed to produce synthetic gas. In this case, the synthesis gas produced so that the ratio (hereinafter, steam/$CH_4$) of the volume of steam to the volume of methane in the mixed raw material satisfied 0.1 and the ratio (hereinafter, $H_2/CH_4$) of the volume of hydrogen to the volume of methane in the mixed raw material satisfied 0.1.

Then, the catalytic reaction of Example 7 was performed in the same manner as in Example 1, except for undergoing reaction with the catalyst under the reaction temperature and reaction pressure conditions shown in Table 2 below.

**<Examples 8 and 9 and Comparative Example 7>**

The catalytic reactions of Examples 8 and 9 and Comparative Example 7 were performed in the same manner as in Example 7, except that the condition of steam/$CH_4$, the condition $H_2/CH_4$, the reaction temperature condition, and the reaction pressure condition of the mixed raw material were set as shown in Table 2 below.

That is, in Comparative Example 7, the catalytic reaction was carried out under conditions where hydrogen was not included in the mixed raw material and only steam was partially included.

After completion of each reaction of Examples 7 to 9 and Comparative Example 7, a reaction conversion rate after 60 hours of reaction was calculated by analyzing the composition of the produced gas using gas chromatography (GC), and is shown in Table 2 below. In addition, the ratio (hereinafter referred to as $H_2/CO$) of the volume of hydrogen to the volume of carbon monoxide after completion of the reaction was also obtained.

Additionally, the coke generation rate was also calculated.

The result values are shown in Table 2 below.

In this case, the conversion rate and the coke generation rate were calculated using Equations 4 to 6 above.

[Table 2]

| Section | $H_2/CH_4$ | Steam/$CH_4$ | temperature (°C) | Pressure (bar(g)) | $CH_4$ Conversion rate (%) | $CO_2$ Conversion rate (%) | $H_2/CO$ | Coke (wt%) |
|---|---|---|---|---|---|---|---|---|
| Example 7 | 0.1 | 0.1 | 850 | 4 | 88.2 | 87 | 0.95 | 3.6 |
| Example 8 | 0.1 | 0.2 | 850 | 4 | 90.8 | 84.2 | 0.98 | 2.7 |
| Example 9 | 0.1 | 0.3 | 850 | 4 | 94 | 79 | 1.2 | 1.8 |
| Comparative Example 7 | 0 | 0.2 | 850 | 4 | 91 | 84 | 0.9 | 5.2 |

As can be seen in Table 2 above, it could be confirmed that when the ratio of $H_2/CH_4$ in the mixed raw material satisfies Equation 1 according to the present application and the ratio of steam/$CH_4$ satisfies Equation 2 according to the present application, appropriate levels of $CH_4$ and $CO_2$ conversion rates were exhibited, and the coke generation rate was low under the same reaction temperature and reaction pressure conditions. In other words, it could be confirmed that a more stable operation was possible over a long period of time than using, as fuel, methane not mixed with hydrogen under the same conditions.

In addition, it could be confirmed that the ratio of $H_2/CO$ could also be changed by adjusting the ratio of steam/$CH_4$. This means that the ratio of $H_2$ and CO necessary for downstream processes following the carbon dioxide reforming process can be easily adjusted according to a purpose of each process.

Additionally, when compared to Example 5 in Table 1 above with the same ratio of $H_2/CH_4$, reaction temperature condition, and reaction pressure condition, it could be confirmed that if the ratio of $H_2/CH_4$ in the mixed raw material satisfies Equation 1 according to the present application and the ratio of steam/$CH_4$ satisfies Equation 2 according to the present application, the appropriate $CH_4$ conversion rate and $CH_4$ conversion rate were exhibited and the coke generation rate was lower.

In other words, it could be confirmed that when a certain amount (small amount) of steam is included in the mixed raw material, a more stable operation is possible over a long period of time.

**Claims**

1. A carbon dioxide reforming process comprising: supplying a mixed raw material (feed) comprising carbon dioxide ($CO_2$), methane ($CH_4$) and hydrogen ($H_2$) to a reactor; and

causing the mixed raw material to contact a catalyst inside the reactor,
wherein Equation 1 below is satisfied:

$$[Equation\ 1]$$

$$0.05 < a/b \leq 0.3$$

in Equation 1,

a refers to a volume of the hydrogen in the mixed raw material, and
b refers to a volume of the methane in the mixed raw material.

2.  The carbon dioxide reforming process of claim 1, wherein the causing the mixed raw material to contact the catalyst inside the reactor is performed at a temperature ranging from 600°C to 1,000°C.

3.  The carbon dioxide reforming process of claim 1, wherein the causing the mixed raw material to contact the catalyst inside the reactor is performed at a pressure ranging from 0 bar(g) to 20 bar(g) within the reactor.

4.  The carbon dioxide reforming process of claim 1, wherein the supplying the mixed raw material (feed) to the reactor refers to supplying the mixed raw material in the form of gas, and
    wherein a gas hourly space velocity (GHSV) is 250 $hr^{-1}$ to 3,000 $hr^{-1}$.

5.  The carbon dioxide reforming process of claim 1, wherein the catalyst is a perovskite-based catalyst, and the perovskite-based catalyst is represented by Chemical Formula 1 below:

    [Chemical Formula 1]        $Sr_{1-x}A_xTi_{1-y}B_yO_{3-\delta}$

    in Chemical Formula 1,

    A is selected from Y, Sc and lanthanide series elements,
    B is Ni, Co, Fe, Mn, Cr, Mo, Ru or Rh,
    x is $0 \leq x < 1$,
    y is $0 < y < 0.2$, and
    $\delta$ is $0 \leq \delta < 1$.

6.  The carbon dioxide reforming process of claim 1, further comprising preparing a mixed raw material (feed) comprising carbon dioxide ($CO_2$), methane ($CH_4$) and hydrogen ($H_2$) for supplying to the reactor.

7.  The carbon dioxide reforming process of claim 6, wherein the preparing of the mixed raw material (feed) comprising carbon dioxide ($CO_2$), methane ($CH_4$) and hydrogen ($H_2$) comprises:

    Supplying the carbon dioxide ($CO_2$), natural gas and the hydrogen ($H_2$) to a mixer, respectively, or supplying the carbon dioxide ($CO_2$) and a mixed gas of methane ($CH_4$)-hydrogen ($H_2$) to a mixer, respectively;
    mixing the gases supplied to the mixer to produce a final mixed gas; and
    compressing the final mixed gas.

8.  The carbon dioxide reforming process of claim 7, further comprising reforming the compressed final mixed gas to produce a synthesis gas comprising carbon monoxide (CO), hydrogen ($H_2$), unreacted methane ($CH_4$) and carbon dioxide ($CO_2$),
    wherein the producing of the synthesis gas comprises:

    adding steam to the compressed final mixed gas; and
    reforming the compressed mixed gas to which the steam has been added to produce a synthesis gas comprising carbon monoxide (CO), hydrogen ($H_2$), unreacted methane ($CH_4$) and carbon dioxide ($CO_2$).

9.  The carbon dioxide reforming process of claim 1, further comprising:
    filling the reactor with the catalyst before causing the mixed raw material to contact the catalyst inside the reactor; and
    subjecting the reactor filled with the catalyst to reduction condition of $H_2/N_2$.

10. The carbon dioxide reforming process of claim 1, wherein the mixed raw material (feed) further comprises steam, and
    wherein the mixed raw material satisfies Equation 2 below:

    $$[Equation\ 2]$$

    $$0.1 \leq c/b \leq 0.3$$

    in Equation 2,

    c refers to a volume of steam in the mixed raw material, and

b refers to a volume of methane in the mixed raw material.

[Figure 1]

[Figure 2]

## INTERNATIONAL SEARCH REPORT

| | International application No. |
| --- | --- |
| | **PCT/KR2023/014480** |

### A. CLASSIFICATION OF SUBJECT MATTER

**C01B 3/38**(2006.01)i; **C01B 3/40**(2006.01)i; **B01J 23/00**(2006.01)i

According to International Patent Classification (IPC) or to both national classification and IPC

### B. FIELDS SEARCHED

Minimum documentation searched (classification system followed by classification symbols)

C01B 3/38(2006.01); B01J 23/00(2006.01); C01B 3/40(2006.01); C01B 32/50(2017.01); C07C 29/153(2006.01); C07C 29/159(2006.01); C10B 27/00(2006.01); C10G 70/00(2006.01); C10J 3/02(2006.01); C10K 3/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이산화탄소(carbon dioxide), 메탄(methane), 수소(hydrogen), 촉매(catalyst), 개질 (modification), 부피(volume), 혼합 가스(mixed gas), 일산화탄소(carbon monoxide), 수증기(steam)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2016-0100327 A (BASF SE) 23 August 2016 (2016-08-23)<br>See paragraphs [0021], [0023], [0049] and [0116]; and claims 1-9, 12 and 14. | 1-10 |
| A | KR 10-2015-0022050 A (RESEARCH INSTITUTE OF INDUSTRIAL SCIENCE & TECHNOLOGY) 04 March 2015 (2015-03-04)<br>See entire document. | 1-10 |
| A | KR 10-2010-0065504 A (KOREA RESEARCH INSTITUTE OF CHEMICAL TECHNOLOGY et al.) 17 June 2010 (2010-06-17)<br>See entire document. | 1-10 |
| A | KR 10-2011-0013968 A (SK INNOVATION CO., LTD.) 10 February 2011 (2011-02-10)<br>See entire document. | 1-10 |
| A | KR 10-1402241 B1 (KOREA RESEARCH INSTITUTE OF CHEMICAL TECHNOLOGY) 02 June 2014 (2014-06-02)<br>See entire document. | 1-10 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 December 2023** | **29 December 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 600 205 A1

| INTERNATIONAL SEARCH REPORT | | International application No. | |
|---|---|---|---|
| Information on patent family members | | PCT/KR2023/014480 | |

| Patent document cited in search report | | | Publication date (day/month/year) | Patent family member(s) | | | Publication date (day/month/year) |
|---|---|---|---|---|---|---|---|
| KR | 10-2016-0100327 | A | 23 August 2016 | CN | 106029558 | A | 12 October 2016 |
| | | | | DE | 112014005798 | A5 | 06 October 2016 |
| | | | | EP | 2886514 | A1 | 24 June 2015 |
| | | | | JP | 2017-501958 | A | 19 January 2017 |
| | | | | RU | 2016129500 | A | 25 January 2018 |
| | | | | RU | 2680060 | C1 | 14 February 2019 |
| | | | | US | 2016-0311684 | A1 | 27 October 2016 |
| | | | | WO | 2015-091310 | A1 | 25 June 2015 |
| KR | 10-2015-0022050 | A | 04 March 2015 | KR | 10-1501655 | B1 | 12 March 2015 |
| KR | 10-2010-0065504 | A | 17 June 2010 | AU | 2009-325375 | A1 | 21 July 2011 |
| | | | | AU | 2009-325375 | B2 | 26 April 2012 |
| | | | | CN | 102307835 | A | 04 January 2012 |
| | | | | CN | 102307835 | B | 04 December 2013 |
| | | | | EP | 2371799 | A1 | 05 October 2011 |
| | | | | EP | 2371799 | B1 | 05 March 2014 |
| | | | | JP | 2012-511043 | A | 17 May 2012 |
| | | | | JP | 5405588 | B2 | 05 February 2014 |
| | | | | KR | 10-1068995 | B1 | 30 September 2011 |
| | | | | US | 2011-0237689 | A1 | 29 September 2011 |
| | | | | US | 8729141 | B2 | 20 May 2014 |
| | | | | WO | 2010-067945 | A1 | 17 June 2010 |
| KR | 10-2011-0013968 | A | 10 February 2011 | AU | 2010-279831 | A1 | 23 February 2012 |
| | | | | AU | 2010-279831 | B2 | 25 February 2016 |
| | | | | CA | 2770290 | A1 | 10 February 2011 |
| | | | | CA | 2770290 | C | 24 January 2017 |
| | | | | CN | 102597182 | A | 18 July 2012 |
| | | | | CN | 102597182 | B | 20 August 2014 |
| | | | | DE | 112010003184 | T5 | 28 June 2012 |
| | | | | JP | 2013-501123 | A | 10 January 2013 |
| | | | | JP | 5686803 | B2 | 18 March 2015 |
| | | | | KR | 10-1570882 | B1 | 23 November 2015 |
| | | | | US | 2012-0241676 | A1 | 27 September 2012 |
| | | | | US | 8663504 | B2 | 04 March 2014 |
| | | | | WO | 2011-016668 | A2 | 10 February 2011 |
| | | | | WO | 2011-016668 | A3 | 30 June 2011 |
| KR | 10-1402241 | B1 | 02 June 2014 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220128043
- KR 1020190076367